Europäisches Patentamt

European Patent Office

Office européen des brevets

(19)

(11) Veröffentlichungsnummer: **0 146 744**
**A2**

(12) # EUROPÄISCHE PATENTANMELDUNG

(21) Anmeldenummer: 84113382.0

(22) Anmeldetag: 06.11.84

(51) Int. Cl.⁴: **B 29 C 65/02**
**B 65 B 9/04**

(30) Priorität: 08.12.83 DE 3344441

(43) Veröffentlichungstag der Anmeldung:
03.07.85 Patentblatt 85/27

(84) Benannte Vertragsstaaten:
AT BE CH DE FR GB IT LI LU NL SE

(71) Anmelder: Alcan Ohler GmbH

D-5970 Plettenberg/Ohle(DE)

(72) Erfinder: Barnewitz, Manfred
Ohler Strasse 107
D-5970 Plettenberg-Ohle(DE)

(72) Erfinder: Hessmer, Jürgen
Ziegelstrasse 62
D-5970 Plettenberg-Ohle(DE)

(72) Erfinder: Saure, Gerhard
Im Weingarten 31
D-5952 Dünschede(DE)

(74) Vertreter: Patentanwälte Grünecker, Dr. Kinkeldey, Dr.
Stockmair, Dr. Schumann, Jakob, Dr. Bezold, Meister,
Hilgers, Dr. Meyer-Plath
Maximilianstrasse 58
D-8000 München 22(DE)

(54) **Verfahren und Vorrichtungg zum Versiegeln eines Konserven und Präservenbehälters.**

(57) Die Erfindung betrifft ein Verfahren und eine Vorrichtung
zum Versiegeln eines Konserven- oder Präservenbehälters,
der einen ebenen, mit Siegelschicht versehenen Randflansch
aufweist, auf den ein ebenfalls mit Siegelschicht versehener
Deckel aufsiegelbar ist, wobei die Siegelschichten unter
Einwirkung von Druck und Wärme aufeinander gepreßt
werden. Bei der heute üblichen Arbeitsweise erfordert die
Konstanthaltung der Versiegelungsparameter, insbesondere
der Enddicke der Siegelschichten in engen Toleranzen einen
erheblichen technischen Aufwand. Erfindungsgemäß werden die Siegelschichten auf einen fest eingestellten Teil ihrer
Ausgangsdicke auf Anschlag zusammengepreßt, wobei ein
starrer Anschlag vorgesehen ist, der einen konstanten,
planparallelen Endabstand der Siegelwerkzeughälften
sichert.

./...

Croydon Printing Company Ltd.

Fig. 1

# B E S C H R E I B U N G

Die Erfindung bezieht sich auf ein Verfahren zum Versiegeln eines Konserven- oder Präservenbehälters, der einen ebenen, mit Siegelschicht versehenen Randflansch aufweist, auf den ein ebenfalls mit Siegelschicht versehener Deckel aufsiegelbar ist, wobei Behälter und Deckel aus einem Folienwerkstoff, vorzugsweise Aluminiumfolie, bestehen, mittels eines mehrteiligen Siegelwerkzeugs in der Weise, daß das Siegelwerkzeug zusammengefahren wird und die Siegelschicht oder die Siegelschichten unter Einwirkung von Druck und Wärme aufeinander gepreßt werden.

Aus der DE-PS 18 06 491 ist eine Vorrichtung bekannt, mit deren Hilfe tiefgezogene Behälter aus thermoplastischer Folie, auf die eine Verschlußfolie aus Aluminium aufgesiegelt werden soll, vor dem Versiegeln durch einen Walzvorgang eine gleichmäßige Flanschdicke erhalten. Die Vorrichtung bedient sich dabei zweier Kalibrierwalzen, deren minimaler Walzenspalt durch einen Anschlag fest begrenzt ist. Diese Vorrichtung dient dem Zweck der Kalibrierung eines tiefgezogenen Behälters und ist damit nicht geeignet, eine zuverlässige und dauerhafte Versiegelung zu erzielen. Es wäre nicht möglich, den Anpressdruck zwischen Behälter und Deckel mit Hilfe von Walzen so aufzubringen, daß die für eine sichere Versiegelung nötige Enddicke der Siegelschichten erreicht wird. Die Höhe des wirksamen Anpressdrucks ließe sich weder feststellen noch variieren, ob der Druck für eine Versiegelung immer ausreichend wäre, wäre ebenfalls ungewiß. Abhängig davon, ob die längs oder quer zur Durchlaufrichtung der Behälter stehenden Siegelnähte im Eingriff der Walzen lägen, führte dies, bedingt durch die unterschiedliche Krafteinwirkung im Walzspalt, zu einer unterschiedlichen und in der Produktion nicht beeinflussbaren Dicke der Siegelnaht. Es wäre nicht möglich, über die ganze Siegelnaht des Behälters einen gleichmäßigen und kontrollierbaren Anpressdruck während des Versiegelns mit Hilfe dieser Vorrichtung aufzubringen, was dazu führen würde, daß in bestimmten Bereichen der Siegelnaht die Siegelschicht fast völlig ausgequetscht würde, während in anderen Bereichen kein ausreichendes Zusammenpressen von Behälter und Deckel erfolgen würde. Daraus ergibt sich, insbesondere auch bei Behältern, die in ihrem Mittelteil einen zusätzlichen Steg aufweisen, die Gefahr, daß an manchen Bereichen des Behälters im Extremfall gar keine Versiegelung stattfinden würde. Bei der bekannten Vorrichtung besteht ferner keine Möglichkeit mit einfachen Mitteln das Werkzeug auf unterschiedliche Ausgangsdicken oder Qualität der zu versiegelnden Werkstoffe einzustellen.

Die Versiegelung der genannten Behälter erfordert bei der heute üblichen Arbeitsweise die Konstanthaltung der Versiegelungsparameter in engen Toleranzen, ausser der Temperatur des Siegelwerkzeuges und der Siegeldauer ist besonders die Druckkonstanthaltung mit einem erheblichen technischen Aufwand verbunden. In der praktischen Anwendung hat sich herausgestellt, daß die an Deckel und Behälter angebrachten verschmelzbaren Siegelschichten auf etwa die Hälfte ihrer Ausgangsdicke reduziert werden müssen, um eine zuverlässige Versiegelung der Behälter zu gewährleisten. Diese Enddicke der Siegelschichten wird bei einer bestimmten Temperatur und Einwirkdauer direkt durch die Höhe des wirksamen Siegeldrucks bestimmt. Um eine gleichmäßige Dicke der Siegelnaht im gesamten Flanschbereich zu erhalten, müssen bei der bisherigen Arbeitsweise die Führungen der Werkzeughälften sehr präzise ausgeführt sein, damit auch bei den hohen Arbeitstemperaturen die Planparallelität der Werkzeughälften sichergestellt ist.

Der Erfindung liegt die Aufgabe zugrunde, ein Verfahren und eine Vorrichtung der eingangs erläuterten Gattung so auszubilden, daß eine zuverlässige und dauerhafte Versiegelung der Behälter mit einfachen Mitteln möglich ist und eine vorbestimmte Dicke der Siegelnaht in für die Praxis ausreichender Genauigkeit ohne eng tolerierte Regelung des Siegeldrucks eingehalten werden kann.

Diese Aufgabe wird erfindungsgemäß dadurch gelöst, daß zwischen dem Ober- und Unterteil des Siegelwerkzeugs ein starrer Anschlagkörper angebracht ist, der es ermöglicht, die Siegelschichten auf einen fest eingestellten Teil ihrer Ausgangsdicke auf Anschlag zusammenzupressen.

Das erfindungsgemäße Verfahren hat gegenüber dem Stand der Technik wesentliche Vorteile. Durch die exakte Reproduzierbarkeit der gewünschten Siegelnahtenddicken wird eine gleichmäßige Qualität der Versiegelung sowohl über die gesamte Siegelnaht eines Behälters als auch über die Gesamtzahl der Siegelbehälter sichergestellt. Schwankungen der Versiegelungsparameter in relativ weiten Grenzen üben keinen Einfluß mehr auf die als notwendig und wichtig erkannte konstante Enddicke der Siegelschichten aus.

Mit Vorteil ist eine Vorrichtung zur Durchführung des erfindungsgemäßen Verfahrens so ausgebildet, daß ein starrer Anschlag vorgesehen ist, der bei zusammengefahrenem Werkzeug einen konstanten, planparallelen Endabstand der Siegelwerkzeughälften in Abhängigkeit von der gewünschten Enddicke der miteinander verpreßten Siegelschichten sichert. Durch die Verwendung des starren Anschlags ergibt sich eine wesentlich vereinfachte Bauweise des Siegelwerkzeugs, da die Planparallelität der bei der Versiegelung wirkenden Werkzeugteile nunmehr allein durch den starren Anschlagkörper und nicht mehr wie bisher durch eine notwendigerweise sehr präzis ausgeführte Säulenführung bewirkt wird. Das bedeutet, die Führung der beweglichen Werkzeughälfte darf gröber und damit billiger und weniger störanfällig ausgebildet sein.

Weiterhin entfällt die bisher nur mit einem erheblichen technischen Aufwand realisierbare Druckkonstanthaltung. Es genügt nunmehr, die Druckbeaufschlagung so zu konstruieren, daß ein eingestellter Mindestdruck überschritten wird. Die obere Toleranz des Siegeldrucks ist dagegen relativ unkritisch, weil der starre Anschlag ein übermäßiges Zusammenquetschen der Siegelflächen verhindert. Diese Gründe führen insgesamt zu einer wesentlichen Verbilligung des Siegelwerkzeugs.

Eine günstige Ausgestaltung der erfindungsgemäßen Vorrichtung wird dadurch erreicht, daß der starre Anschlag verstellbare Anschlagkörper aufweist. Auf diese Weise lassen sich Maß- und Formabweichungen der Siegelnahtdicke schnell und einfach korrigieren. Als weiterer Vorteil gegenüber dem Stand der Technik ergibt sich die Möglichkeit der Nachjustierung des starren Anschlagkörpers bei geänderten Einflußfaktoren wie Siegelschichtdicke und Foliendicke. Ferner ist durch die einstellbare Planparallelität der Vorrichtung im Endanschlag gewährleistet, daß über den ganzen Bereich der Siegelnaht gleiche Siegelschichtendicke auch bei ungleicher Temperaturverteilung erreicht wird.

Im folgenden wird das erfindungsgemäße Verfahren anhand eines Ausführungsbeispiels in Verbindung mit der Zeichnung beschrieben.

Dabei zeigen,

Figur 1    schematisch den Aufbau eines Ausführungsbeispiels einer erfindungsgemäßen Vorrichtung,
Figur 2    ein Detail vor dem Siegelvorgang, und
Figur 3    das selbe Detail nach dem Siegelvorgang.

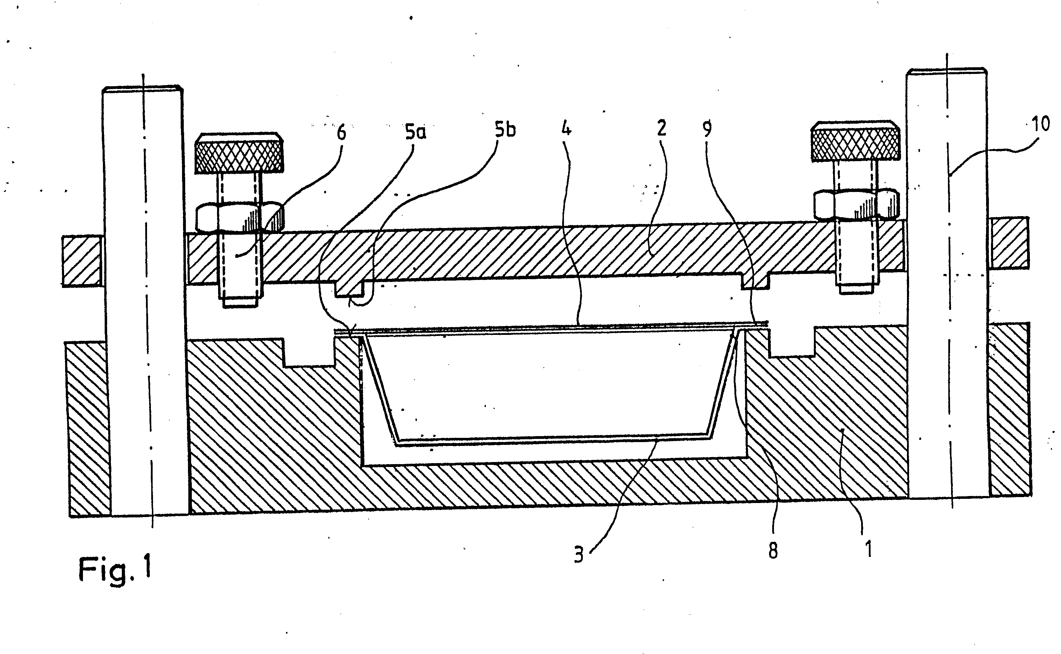

Das in Figur 1 dargestellte Siegelwerkzeug weist ein Unterteil 1 auf, dem ein Oberteil 2 zugeordnet ist.

Die beiden Teile der Siegelwerkzeuge haben einander korrespondierende ebene Siegelflächen 5a und 5b, die mit Hilfe von Führungen 10 planparallel in ihrem Abstand verändert werden können. In eine Vertiefung des Unterteils 1 ist ein tiefgezogener Behälter 3 eingelegt, auf dem eine Siegelschicht 8 aufgebracht ist. Auf dem Behälter ist ein Deckel 4 positioniert, der mit einer Siegelschicht 9 versehen ist. Die Figur 1 zeigt das Werkzeug vor Beginn des Versiegelungsvorganges. Die Siegelfläche des Unterteils 5a und die Siegelfläche des Oberteils 5b sind geöffnet. Das Maß für die Dickenreduzierung der Siegelschichten 8 und 9 ist an einem starren Anschlagkörper 6 eingestellt worden. Notwendigerweise sind mehrere dieser starren Anschlagkörper am Umfang des Siegelwerkzeugs angebracht.

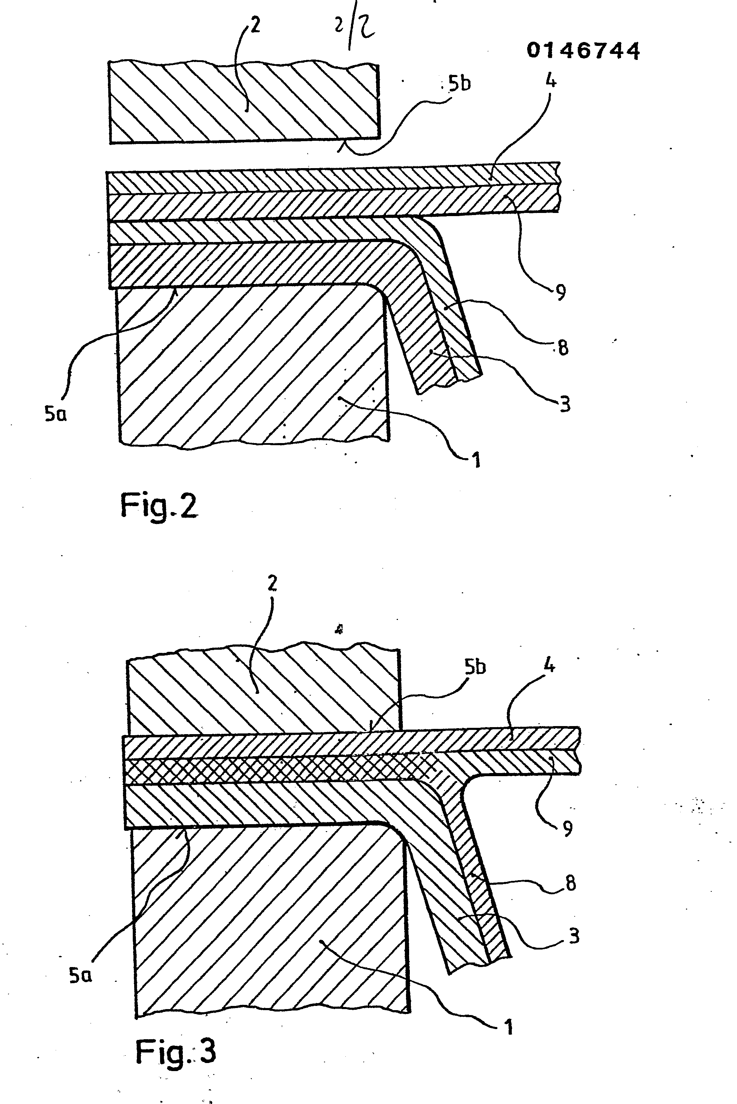

Die Figur 2 zeigt im Detail die Siegelflächen 5a und 5b des Siegelwerkzeug-Unterteils 1 bzw. des Siegelwerkzeug-Oberteils 2 im geöffneten Zustand. Der Behälter 3 mit der auf ihm angebrachten Siegelschicht 8 ist in das Unterteil des Werkzeugs eingelegt. Der Deckel 4 mit der auf ihm aufgebrachten Siegelschicht 9 ist positioniert. Der Versiegelungsvorgang erfolgt durch planparalleles Zusammenpressen der Siegelwerkzeuge 1 und 2. Die Figur 3 zeigt das Detail der Figur 2 nach Beendigung des Siegelvorganges. Die Siegelschichten 8 und 9 sind im Bereich der Siegelnaht auf, im gewählten Beispiel, 50 % ihrer Ausgangsdicke reduziert worden.

In der Praxis hat sich gezeigt, daß mit Hilfe der beschriebenen Vorrichtung eine optimale Wirkung der Versiegelung bei einer Enddicke der Siegelschichten im Bereich von 40 bis 60 % der Ausgangsdicke erreicht wird.

Die starren Anschlagkörper 6 können wie in Figur 1 gezeigt, in Form einer Schraube ausgebildet sein. Es sind jedoch

6                    0146744

auch Lösungsmöglichkeiten denkbar, die einen Keil oder einen Exzenter oder lose einlegbare Anschlagstücke verwenden.

Die Erfindung ist nicht auf das ausgeführte Beispiel eines tiefgezogenen Behälters mit einer Füllkammer beschränkt. Beispielsweise kann auch ein Behälter mit zwei Füllkammern und einem Mittelsteg mit Hilfe dieser Vorrichtung, die dann entsprechende korrespondierende Siegelflächen aufweisen muß, ganz besonders zuverlässig versiegelt werden, da die Anschlagseinrichtungen über die gesamte zur Verfügung stehende Wirkfläche des Werkzeugs eine gleichmäßige Siegelschichtdicke und damit verbunden eine gleichmäßige Versiegelung erlauben.

GRÜNECKER, KINKELDEY, STOCKMAIR & PARTNER

PATENTANW**0146744**

EUROPEAN PATENT ATTORNEYS

A GRUNECKER, DIPL-ING
DR H KINKELDEY DIPL-ING
DR W STOCKMAIR, DIPL-ING AE E ICALTECH
DR K SCHUMANN, DIPL-PHYS
P H JAKOB DIPL-ING
DR G BEZOLD, DIPL-CHEM
W. MEISTER, DIPL-ING
H HILGERS DIPL-ING
DR H MEYER-PLATH DIPL-ING

8000 MÜNCHEN 22
MAXIMILIANSTRASSE 43

Alcan Ohler GmbH          PH 18 309
5970 Plettenberg/Ohle

Verfahren und Vorrichtung zum Versiegeln

eines Konserven- oder Präservenbehälters
================================================

P A T E N T A N S P R Ü C H E

1.    Verfahren zum Versiegeln eines Konserven- oder Präservenbehälters, der einen ebenen, mit Siegelschicht
versehenen Randflansch aufweist, auf den ein ebenfalls
mit Siegelschicht versehener Deckel aufsiegelbar ist,
wobei Behälter und Deckel aus einem Folienwerkstoff, vorzugsweise Aluminiumfolie, bestehen, mittels eines mehrteiligen Siegelwerkzeugs in der Weise, daß das Siegelwerkzeug zusammengefahren wird und die Siegelschicht
oder die Siegelschichten unter Einwirkung von Druck
und Wärme aufeinander gepreßt werden, dadurch
g e k e n n z e i c h n e t , daß die Siegelschichten
auf einen fest eingestellten Teil ihrer Ausgangsdicke
auf Anschlag zusammengepreßt werden.

2.    Vorrichtung zum Durchführen des Verfahrens nach
Anspruch 1, dadurch g e k e n n z e i c h n e t ,

daß ein starrer Anschlag (6) vorgesehen ist, der bei zusammengefahrenem Werkzeug (1 und 2) einen konstanten, planparallelen Endabstand der Siegelwerkzeughälften in Abhängigkeit von der gewünschten Enddicke der miteinander verpreßten Siegelschichten sichert.

3. Vorrichtung nach Anspruch 2, dadurch g e k e n n - z e i c h n e t , daß der starre Anschlag (6) verstellbare Anschlagkörper aufweist.

0146744

Fig. 1

Fig. 2

Fig. 3